# FASCICULE DE BREVET EUROPEEN

(11) **EP 3 393 697 B1**
(45) Date de publication et mention de la délivrance du brevet: **03.11.2021**
(21) Numéro de dépôt: 16819076.7
(22) Date de dépôt: 20.12.2016
(51) Int. Cl.: B33Y 10/00, B29C 64/141, B29C 64/153, B29C 64/35, B29C 64/205, B29C 64/209, B22F 10/28, B22F 12/53, B22F 10/37, B22F 12/57

(54) **PROCEDE DE FABRICATION ADDITIVE COMPRENANT UNE ETAPE DE DISTRIBUTION DE POUDRE PAR UN INJECTEUR**
VERFAHREN ZUR GENERATIVEN FERTIGUNG MIT EINEM PULVERVERTEILUNGSSCHRITT DURCH EINEN INJEKTOR
ADDITIVE MANUFACTURING PROCESS COMPRISING A POWDER DISTRIBUTION STEP PERFORMED BY AN INJECTOR

(30) Priorité: 23.12.2015 FR 1563249
(43) Date de publication de la demande: 31.10.2018
(73) Titulaire: AddUp, 63118 Cébazat (FR)
(72) Inventeur: NICAISE, Jean-Pierre, 63118 Cebazat (FR); SARTORI, Jean-François, 63118 Cebazat (FR)
(74) Mandataire: Barascou, Frédéric
(86) Numéro de dépôt international: PCT/EP2016/082038
(87) Numéro de publication internationale: WO 2017/108867

(56) Documents cités:
- WO-A2-2005/097476
- US-A1- 2014 252 687

## Description

L'invention concerne le domaine des machines de fabrication additive, également appelées imprimantes 3D. Plus précisément, l'invention concerne l'injection et la distribution de poudre dans une telle machine.

Selon une technique connue, une pièce est réalisée par impression dite 3D à partir d'une poudre. La pièce est préalablement découpée en tranches à l'aide d'un outil CAO. La poudre est ensuite étalée en couches successives sur une surface de travail, chaque couche subissant, avant d'être recouverte par la couche suivante, une étape de fusion et solidification. A cet effet, un apport d'énergie, par exemple par un faisceau laser, permet de dessiner dans la couche de poudre un solide correspondant à la tranche de la pièce à fabriquer. La pièce à fabriquer est généralement supportée par un plateau qui se déplace dans une chambre de fabrication au fur et à mesure que les tranches de la pièce sont fondues et solidifiées pour pouvoir former la couche de poudre suivante. Le plateau définit donc une surface cible, c'est-à-dire une surface dont l'ensemble des points peut être atteint par le faisceau laser, ou tout autre apport d'énergie.

La poudre est généralement mise à disposition sur la surface de travail suivant une ligne, un dispositif d'étalement, qui est typiquement un rouleau ou une raclette, se déplaçant transversalement à la ligne de poudre et assurant ainsi l'étalement de la poudre.

Le document US 5,597,589 décrit un exemple de réalisation de la technique ci-dessus. Plus précisément, selon cet exemple, une machine de fabrication comprend un distributeur de poudre, en l'occurrence métallique, permettant de distribuer une portion de poudre. Un rouleau permet éventuellement d'étaler la poudre. Un faisceau laser vient fritter de manière sélective une première couche correspondant à une première tranche de la pièce à fabriquer. Le procédé est ensuite répété couche après couche.

La poudre doit être distribuée sur la surface de travail devant le dispositif d'étalement. Par exemple, la poudre est dans un réservoir à partir duquel le dispositif d'étalement récupère devant lui, en se déplaçant, de la poudre, le niveau du réservoir étant remonté par un système de piston au fur et à mesure que le réservoir se vide, comme cela est présenté par exemple dans le document WO 93/08928. Il est également connu de déposer une ligne de poudre devant le dispositif d'étalement, par exemple au moyen d'un bras de déversement dont la longueur correspond sensiblement à la longueur du dispositif d'étalement, comme dans le document US 5,597,589 précité.

Un problème qui se pose est la gestion de la poudre.

En effet, pour une pièce à fabriquer, il est d'usage d'utiliser une quantité de poudre supérieure à la quantité qui sera in fine fondue et solidifiée pour constituer la pièce. Notamment, cet excès de poudre permet de s'assurer que la couche de poudre recouvre de manière adéquate la surface cible. Plus précisément, les couches de poudre sont en général étalées à partir d'une zone de la surface de travail qui est fixe, par exemple à partir du réservoir de poudre ou à partir d'une zone au-dessus de laquelle le bras de déversement se trouve. En outre, les dimensions de cette zone ne sont pas réglables, mais déterminées par la longueur du dispositif d'étalement ou du bras de déversement. Au final, quelles que soient les dimensions et la géométrie de la pièce à fabriquer, l'ensemble de la chambre de fabrication est remplie par la poudre non fondue entourant la pièce. En outre, il est de pratique courante de prévoir de la poudre en excès débordant au-delà de la surface cible pour chaque couche, notamment pour s'assurer que l'ensemble de la surface cible est bien recouverte par la couche de poudre.

Par conséquent, la quantité de poudre immobilisée pour fabriquer une pièce est souvent bien supérieure à la quantité de poudre qui sera au final fondue. Cette immobilisation augmente les coûts de fabrication de la pièce.

Le document WO 2005/097476 propose de remplir une gouttière se déplaçant le long de deux rails, et de remplir la gouttière sur une longueur entre les deux rails adaptée aux dimensions de la pièce à fabriquer.

Toutefois, cette solution est limitée puisqu'elle ne permet pas de s'adapter à la géométrie de la pièce, mais uniquement à ses dimensions. En outre, dans ce document, les parois de la chambre de fabrication sont construites avec la pièce à fabriquer, utilisant de la poudre qui n'est pas nécessaire à la fabrication de la pièce elle-même.

Par ailleurs, le circuit de poudre dans cette solution implique un nombre important de sous-ensembles, ce qui peut poser problème notamment dans le domaine de la fabrication de pièces pour l'aéronautique, dans lequel le suivi des lots de poudre utilisés est un paramètre important. En effet, il faut être capable d'identifier pour chaque pièce fabriquée le lot de poudre utilisé. Par conséquent, lorsque le lot de poudre utilisé dans la machine est changé, il faut s'assurer que toute la poudre du lot précédent qui demeure dans la machine, aussi bien dans le circuit d'approvisionnement de la machine que sur les surfaces à l'intérieur de la machine exposées à la poudre, soit retirée avant d'utiliser le nouveau lot.

Or, dans le document WO 2005/097476, la poudre passe d'un réservoir à un injecteur, de l'injecteur à la gouttière et enfin de la gouttière à la surface de travail. Par conséquent, lorsque le lot de poudre doit être changé, il faut s'assurer que l'ensemble de ces éléments soient exempts de poudre avant d'utiliser un nouveau lot de poudre, ce qui peut s'avérer fastidieux.

Il existe donc un besoin pour contrôler la quantité de poudre distribuée sur la surface de travail surmontant notamment les inconvénients précités.

A cet effet, un premier objet de l'invention est de proposer un procédé de fabrication additive permettant de limiter la quantité de poudre en excès distribuée sur la surface de travail.

Un deuxième objet de l'invention est de proposer un procédé de fabrication additive permettant de diminuer le temps de fabrication.

Un troisième objet de l'invention est de proposer un procédé de fabrication additive facilitant le changement de lots de poudre utilisée.

Un quatrième objet de l'invention est de proposer un procédé de fabrication additive permettant de doser la quantité de poudre distribuée avec une précision accrue.

Un cinquième objet de l'invention est de proposer un procédé de fabrication additive diminuant le temps de nettoyage de la machine.

Un sixième objet de l'invention est de proposer un procédé de fabrication additive diminuant la quantité de poudre polluée par les scories et donc diminuant le coût de recyclage de ladite poudre.

Selon un premier aspect, l'invention propose un procédé de fabrication additive d'une pièce par fusion sélective partielle ou totale d'une poudre au sein d'une machine. La machine comprend notamment :
- une surface de travail destinée à recevoir une couche de poudre,
- un dispositif d'étalement de ladite couche de poudre selon au moins une direction horizontale longitudinale sur la surface de travail,
- au moins un injecteur pour injecter directement de la poudre sur la surface de travail, l'injecteur étant mobile par rapport à la surface de travail selon au moins une direction horizontale transversale,
- un système de régulation de la quantité de poudre distribuée par l'injecteur.

Le procédé comprend alors notamment les étapes suivantes :
- déplacer l'injecteur le long d'une trajectoire comprenant au moins une composante parallèle à la direction horizontale transversale de manière à distribuer de la poudre le long d'une ligne sur la surface de travail;
- réguler la quantité de poudre distribuée par l'injecteur en tout point de la trajectoire de l'injecteur, la hauteur de poudre de la ligne L de poudre distribuée étant variable en fonction de la position transversale sur la ligne L de poudre.

Le procédé assure ainsi un contrôle sur la quantité de poudre distribuée sur la surface de travail pour l'adapter en fonction des besoins.

Selon un mode de réalisation, l'injecteur est mobile par rapport à la surface de travail selon la direction longitudinale, de manière à permettre également la régulation de la quantité de poudre distribuée sur la surface de travail pendant le déplacement de l'injecteur suivant la direction longitudinale. La quantité de poudre distribuée peut ainsi être encore davantage adaptée aux besoins. A cet effet, par exemple, l'injecteur est solidaire selon la direction longitudinale au dispositif d'étalement, de sorte qu'il n'est pas nécessaire de mettre en place un mécanisme supplémentaire pour déplacer longitudinalement l'injecteur que celui gérant le déplacement du dispositif d'étalement.

Selon un mode de réalisation, l'injecteur est monté de manière amovible dans la machine, de sorte qu'il peut être retiré de la machine pour être nettoyé, par exemple entre deux lots de poudre, assurant un suivi optimal des lots de poudre.

Selon un mode de réalisation, l'injecteur est mobile par rapport à la surface de travail selon une direction verticale, le système de régulation réglant la position verticale de l'injecteur par rapport à la surface de travail. Ainsi, la régulation de la quantité de poudre distribuée peut être effectuée en régulant la hauteur de l'injecteur par rapport à la surface de travail.

L'étape consistant à réguler la quantité de poudre distribuée par l'injecteur en tout point de la trajectoire de l'injecteur peut être réalisée en fonction des paramètres suivants, considérés seuls ou en combinaison :
- en fonction de la géométrie de la pièce à fabriquer,
- en fonction des dimensions de la pièce à fabriquer,
- en fonction de la position de la pièce à fabriquer sur la surface de travail,
- en fonction du matériau de la zone de la pièce à fabriquer sur la surface de travail.

D'autres caractéristiques et avantages de l'invention apparaîtront à la lumière de la description d'exemples de réalisation de l'invention, accompagnée des figures dans lesquelles :
La figure 1 est une représentation schématique en vue de dessus d'une surface de travail dans une machine de fabrication additive comprenant un injecteur ponctuel dans laquelle est mis en oeuvre le procédé de fabrication additive selon un premier exemple de de mise en oeuvre ;
La figure 2 est un graphe illustrant le profil de dépôt de poudre de la figure 1 ;
La figure 3 est une représentation schématique similaire à la figure 1, pour un deuxième exemple de mise en œuvre du procédé de fabrication additive ;
La figure 4 est une représentation schématique similaire à la figure 1, pour un troisième exemple de mise en oeuvre du procédé de fabrication additive ;
La figure 5 est un graphe illustrant le profil de dépôt de poudre de la figure 4 ;
Les figures 6 et 7 sont des représentations schématiques similaires à la figure 1 ; pour un quatrième exemple de mise en oeuvre du procédé de fabrication additive ;
La figure 8 est une représentation schématique similaire à la figure 1, pour un cinquième exemple de mise en oeuvre du procédé de fabrication additive ;
La figure 9 est une représentation schématique d'une partie de la surface de travail selon une variante de réalisation de la machine de fabrication additive.

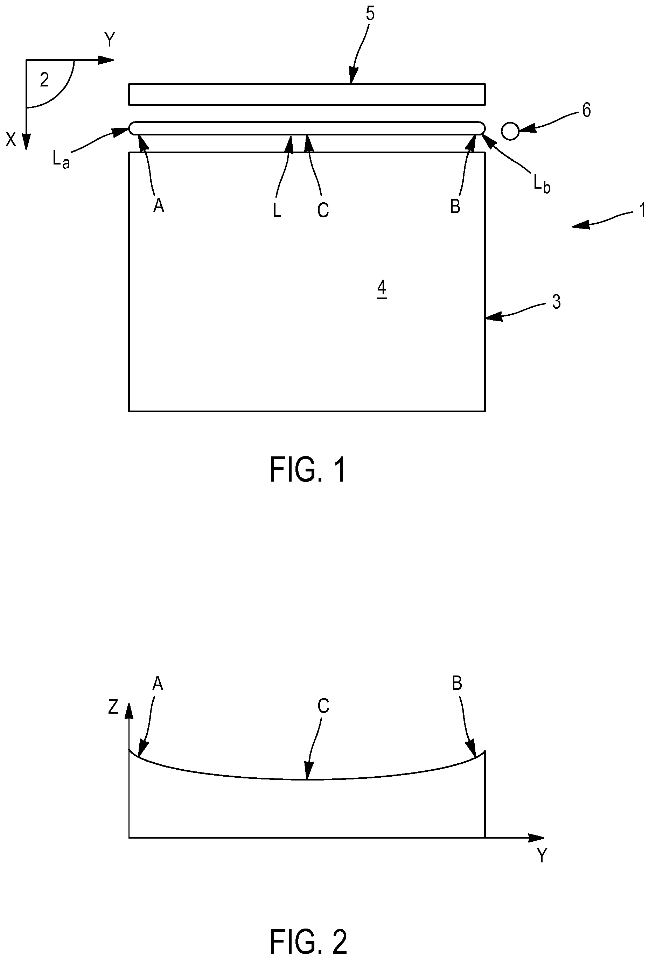

Sur les figures 1 à 9, il est représenté de manière schématique une machine de fabrication additive d'une pièce, par fusion totale ou partielle d'un matériau en poudre. Le matériau utilisé peut être par exemple métallique ou plastique.

La machine 1 comprend typiquement une enceinte, à l'atmosphère de préférence inerte vis-à-vis du matériau utilisé, dont le fond correspond à une surface 2 de travail considérée ici comme horizontale.

A des fins de clarté et de simplification, il est défini sur la surface 2 de travail un axe X longitudinal et un axe Y transversal, parallèles à la surface 2 de travail et orthogonaux entre eux. L'adjectif « longitudinal » et ses variantes désignent alors dans ce qui suit toute direction parallèle à l'axe X longitudinal, de même, l'adjectif « transversal » et ses variantes désignent toute direction parallèle à l'axe Y transversal.

La machine 1 comprend une chemise 3, s'étendant sous la surface 2 de travail selon un axe vertical, et ouverte dans l'enceinte. La chemise 3 sert généralement de guidage à un plateau support de pièce, non représenté, sur lequel repose la pièce P en cours de fabrication. Le plateau descend verticalement dans la chemise 3 au fur et à mesure que les tranches de pièces sont formées par fusion et solidification de la poudre des couches correspondantes. La chemise 3 entoure ainsi une surface 4 cible, correspondant à la surface du plateau vue depuis l'intérieur de l'enceinte dans un plan horizontal, et dont chaque point est susceptible d'être atteint par exemple par un faisceau laser pour fondre la poudre. Ainsi, pour la première couche de poudre, la surface cible correspond à la surface supérieure du plateau support de pièce. Pour les couches suivantes, la surface 4 cible correspond à la surface de poudre fondue et solidifiée et non fondue et solidifiée de la couche précédente, délimitée par les bords du plateau support de pièce.

La machine 1 comprend par ailleurs un système de fusion, non représenté, permettant à la poudre de fondre puis de se solidifier. Il s'agit par exemple d'un laser envoyant un faisceau sur la surface 4 cible pour fusionner au moins partiellement la poudre.

La machine 1 comprend en outre un dispositif 5 d'étalement d'une couche de poudre, monté mobile dans l'enceinte par rapport à la surface 2 de travail suivant l'axe X longitudinal. Dans les exemples présentés ici, le dispositif 5 d'étalement est un rouleau d'axe de rotation parallèle à l'axe Y transversal. Toutefois, le dispositif 5 d'étalement pourra être de tout type, par exemple raclette.

La machine 1 comprend de plus un injecteur 6, connecté à un réservoir de poudre. Par injecteur, il est désigné ici un injecteur ponctuel, c'est-à-dire dont la dimension est très inférieure à celles de la surface 4 cible, la quantité de poudre délivrée par l'injecteur 6 ponctuel à un instant donné s'apparentant à un point, par rapport à la surface 4 cible. L'injecteur 6 est directement en vis-à-vis de la surface 2 de travail, c'est-à-dire que la poudre sortant de l'injecteur 6 est distribuée directement sur la surface 2 de travail.

L'injecteur 6 ponctuel est monté mobile dans l'enceinte, au moins selon l'axe Y transversal, par rapport à la surface 2 de travail, c'est-à-dire que sa trajectoire comprend au moins une composante transversale. Le déplacement de l'injecteur 6 peut être continu ou discret.

La machine comprend enfin un système de régulation de la quantité de poudre injectée par l'injecteur 6. Par régulation de la quantité de poudre, on entend ici qu'un contrôle est exercé sur l'injecteur 6. Par exemple, le système de régulation permet de contrôler et d'ajuster à tout instant le débit de poudre de l'injecteur 6, éventuellement en fonction de sa vitesse de déplacement. Le mode d'injection de poudre peut être continu ou discret.

Selon un exemple, l'injecteur 6 est mobile en translation suivant un axe Z vertical. Le système de régulation permet alors de régler la hauteur de l'injecteur 6, c'est-à-dire la distance entre la sortie de poudre de l'injecteur 6 et la surface 2 de travail, afin de réguler la quantité de poudre distribuée sur la surface 2 de travail. Dans cet exemple de réalisation de l'invention, la poudre tombe de l'injecteur sensiblement par gravité. La poudre distribuée sur la surface de travail prend la forme d'un talus. Lorsque le talus de poudre atteint l'injecteur et obstrue l'orifice de sortie de l'injecteur par lequel s'écoule la poudre, il n'y a plus d'écoulement de poudre. De plus, lorsque l'orifice de sortie de l'injecteur par lequel s'écoule la poudre est en contact avec la surface 2 de travail, il n'y a pas d'écoulement de poudre. Ainsi, la variation de la hauteur de l'injecteur 6 permet de varier le débit en sortie de l'injecteur.

Il est alors possible de déterminer une trajectoire de l'injecteur 6 selon une direction transversale le long de laquelle de la poudre doit être distribuée, et de contrôler la quantité de poudre distribuée en tout point de cette trajectoire de manière à distribuer la quantité de poudre requise sur la surface de travail là où cela est nécessaire, en fonction des besoins. Chaque point de la trajectoire de l'injecteur 6 est par exemple, mais non nécessairement, sensiblement confondu avec le centre de la sortie de l'injecteur 6. Par exemple, lorsqu'une tranche de pièce à fabriquer présente une dimension transversale inférieure à la dimension transversale de la surface 4 cible, alors la trajectoire de l'injecteur 6 le long de laquelle de la poudre est distribuée peut être ajustée à la dimension transversale de la tranche de la pièce P à fabriquer.

La quantité de poudre distribuée selon la trajectoire de l'injecteur 6 peut également être ajustée de manière à s'assurer que la couche de poudre recouvre de manière adéquate la tranche de pièce à fabriquer. En effet, il se peut que de la poudre soit éjectée par le dispositif 5 d'étalement de part et d'autre transversalement, de sorte que les bords longitudinaux de la couche ne sont pas rectilignes. On parle alors d'effet de langue. Afin d'y remédier, l'injecteur 6 peut distribuer une quantité de poudre aux extrémités transversales de la trajectoire de l'injecteur 6 qui est supérieure à la quantité de poudre distribuée par ailleurs.

Enfin, la quantité de poudre distribuée selon la trajectoire de l'injecteur 6 peut également être ajustée pour compenser la diminution de volume de la poudre fondue et solidifiée. En effet, lorsqu'une tranche de pièce est formée par fusion et solidification de la poudre, la densité de la tranche fondue et solidifiée est plus importante que la densité de la poudre non fondue, la tranche fondue et solidifiée formant un affaissement dans la couche de poudre. Dès lors, lorsque la couche suivante recouvrant la tranche en question doit être étalée, pour obtenir une couche plate, il faut tenir compte de cet affaissement. L'injecteur 6 peut alors distribuer selon sa trajectoire transversale une quantité de poudre plus importante juste au niveau de l'affaissement pour le compenser, sans avoir à augmenter la quantité de poudre sur l'ensemble de sa trajectoire.

Un premier exemple de mise en oeuvre du procédé de fabrication est illustré sur la figure 1. Selon ce premier exemple, une couche de poudre doit être formée pour recouvrir l'ensemble de la surface 4 cible. L'injecteur 6 est déplacé, à partir d'une position de repos, transversalement par rapport à la surface 2 de travail, pour distribuer de la poudre suivant au moins une ligne L transversale, sur une distance transversale correspondant à la dimension transversale de la surface 4 cible. La ligne L de poudre présente une dimension longitudinale qui peut être adaptée. Cette dimension longitudinale dépend notamment de la dimension de la sortie de l'injecteur 6.

Sur l'exemple de la figure 1, le déplacement aller de l'injecteur 6, au cours duquel de la poudre est distribuée, est réalisé de gauche à droite, et la quantité de poudre distribuée par l'injecteur 6 le long de la direction transversale est régulée de sorte qu'elle est supérieure à proximité des extrémités **La** et **Lb** de la ligne L, pour compenser l'effet de langue. Plus précisément, la hauteur de poudre de la ligne L de poudre distribuée est variable en fonction de la position transversale sur la ligne L de poudre. Le profil de la hauteur de poudre distribuée le long d'une même direction transversale est alors par exemple en forme de parabole, comme illustré sur la figure 2. En d'autres termes, la quantité de poudre distribuée respectivement aux points **A** et **B**, à proximité respectivement des extrémités Lₐ et L_{b} de la ligne L de poudre est supérieure à la quantité de poudre distribuée au point **C** situé sensiblement au milieu de la ligne L de poudre, les trois points A, B et C étant sensiblement alignés transversalement.

L'injecteur 6 peut ensuite être ramené dans sa position de repos dans un déplacement retour, à gauche de la surface 2 de travail selon l'exemple de la figure 1, pour distribuer une nouvelle ligne de poudre pour la couche suivante dans un nouveau mouvement aller, ou distribuer la nouvelle ligne de poudre pendant le déplacement retour, à partir de la position finale atteinte lors de la formation de la ligne précédente, à droite de la surface 2 de travail selon l'exemple de la figure 1.

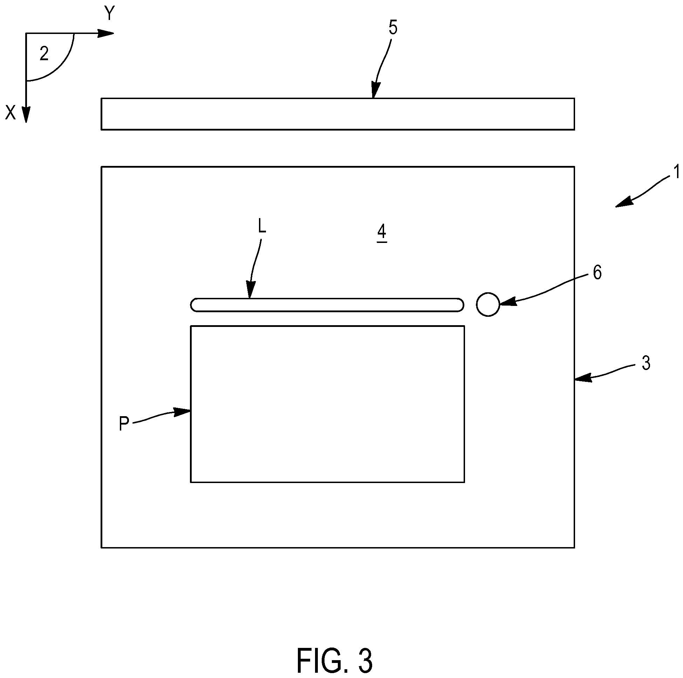

Un deuxième exemple de mise en oeuvre est illustré sur la figure 3, dans lequel l'injecteur 6 est mobile selon l'axe X longitudinal en plus d'être mobile transversalement. Selon ce deuxième exemple, la forme de la pièce P à fabriquer est telle que la couche de poudre à former ne doit pas nécessairement recouvrir totalement la surface 4 cible. Par conséquent, l'injecteur 6 ponctuel a été préalablement déplacé longitudinalement sans distribuer de poudre, puis a été déplacé transversalement de manière à distribuer de la poudre le long d'une ligne L dont la dimension transversale est ajustée à celle de la tranche de la pièce P à fabriquer. Ainsi, toute la surface 4 cible n'est pas recouverte de poudre, et la quantité de poudre distribuée en excès peut être diminuée. Le profil de la hauteur de poudre distribuée le long de la direction transversale de la ligne L de poudre peut être de forme parabolique, comme dans le premier exemple de mise en oeuvre, pour limiter l'effet de langue.

L'injecteur 6 ponctuel se déplaçant selon l'axe X longitudinal et selon l'axe Y transversal permet donc de distribuer la poudre en optimisant les dimensions des couches de poudre successives par rapport aux dimensions de la pièce à fabriquer, pour limiter l'utilisation en excès de poudre, et également en fonction de la position de la pièce P à fabriquer sur la surface 4 cible, sans avoir à remplir la surface 4 cible. Plus précisément, la quantité de poudre distribuée sur la surface 2 de travail en fonction de la direction transversale est réalisée en fonction des dimensions et de la position sur la surface 4 cible de chaque tranche de la pièce P à fabriquer. Notamment, lorsque la tranche considérée de la pièce P à fabriquer est de dimensions inférieures aux dimensions de la surface 4 cible, c'est-à-dire du plateau support de pièce, il peut être avantageux de ne pas recouvrir la surface 4 cible, mais de former la couche de poudre de manière localisée sur la surface 4 cible.

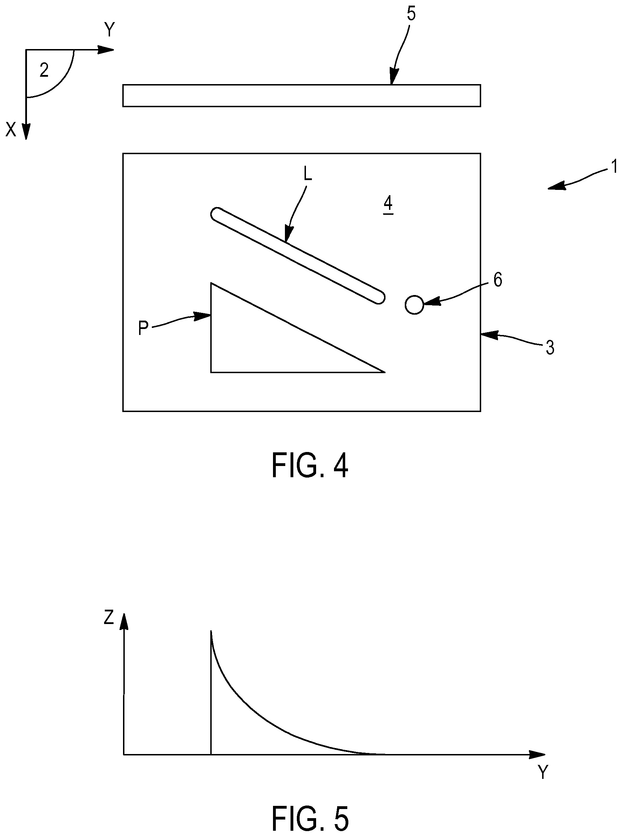

Un troisième exemple de mise en oeuvre du procédé est illustré sur les figures 4 et 5, dans lequel l'injecteur 6 est mobile à la fois transversalement et longitudinalement. Selon ce troisième exemple, la géométrie de la tranche de pièce P à fabriquer présente un bord incliné par rapport aux directions transversale et longitudinale. La dimension transversale de la tranche est par ailleurs inférieure à la dimension transversale de la surface 4 cible. La trajectoire de l'injecteur 6 est alors adaptée en conséquence, de manière à distribuer une ligne L de poudre présentant une composante transversale et une composante longitudinale, se rapprochant du bord incliné, et dont la dimension transversale correspond sensiblement à celle de la tranche de la pièce P à fabriquer. En outre, selon l'exemple des figures 4 et 5, la quantité de poudre nécessaire pour la tranche en question diminue transversalement, en l'occurrence de la gauche vers la droite. La quantité de poudre distribuée par l'injecteur 6 se déplaçant le long de la ligne L est alors régulée en conséquence, de sorte que le profil de la hauteur de poudre distribuée le long de la direction transversale est décroissant de la gauche vers la droite.

Ainsi, la quantité de poudre distribuée est ajustée en fonction de la géométrie de la pièce P à fabriquer, et plus précisément en fonction de la géométrie de la tranche considérée de la pièce P à fabriquer. En d'autres termes, le volume de poudre distribuée sur la surface 2 de travail est ajusté au volume de poudre requis pour la tranche considérée.

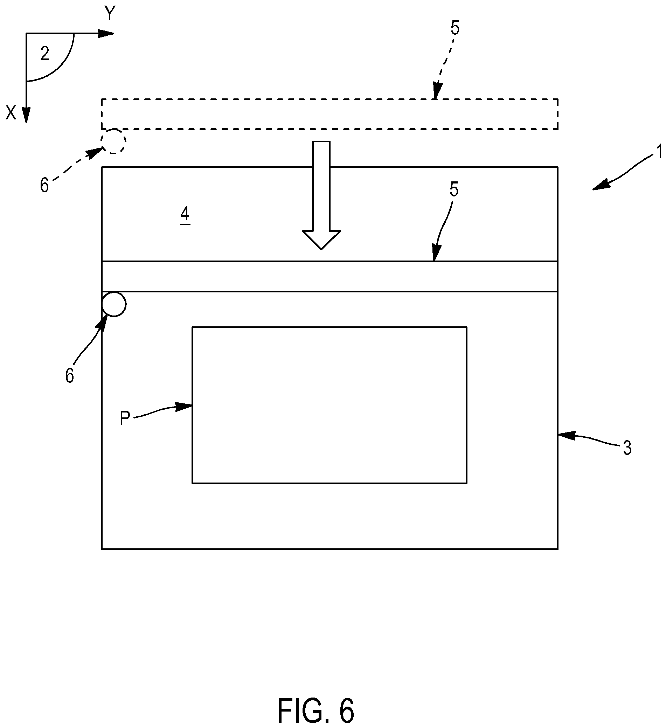

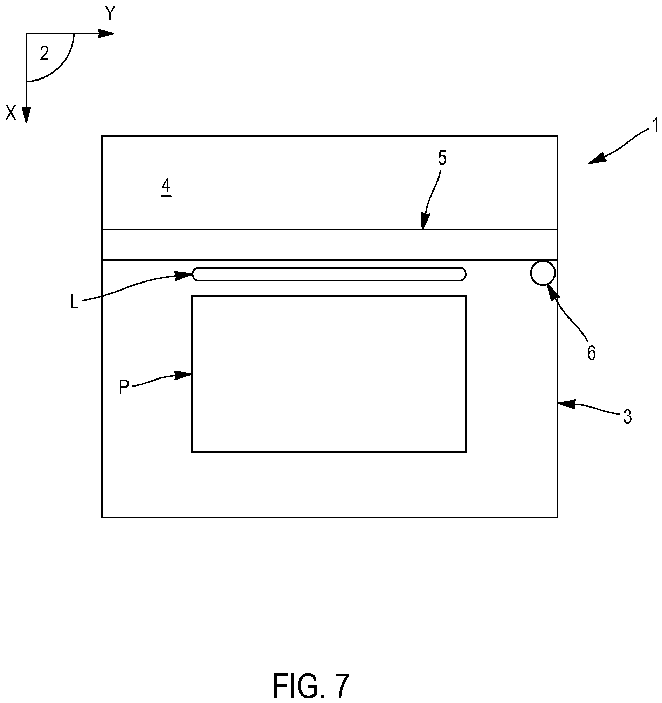

Un quatrième exemple de mise en oeuvre du procédé de fabrication est illustré sur les figures 6 et 7. Dans ce quatrième exemple, l'injecteur 6 ponctuel est solidaire en déplacement selon l'axe X longitudinal du dispositif 5 d'étalement, et est mobile par rapport au dispositif 5 d'étalement selon l'axe Y transversal. Par exemple, l'injecteur 6 ponctuel peut être monté sur une glissière selon l'axe Y transversal qui est fixée rigidement au dispositif 5 d'étalement. La forme de la pièce P à fabriquer selon ce quatrième exemple est similaire à celle du deuxième exemple de mise en oeuvre, de sorte que la couche à former ne recouvre pas totalement la surface 4 cible. Grâce à la solidarisation entre le dispositif 5 d'étalement et l'injecteur 6, en une seule commande de déplacement selon l'axe X longitudinal, le dispositif 5 d'étalement et l'injecteur 6 ponctuel sont déplacés en même temps depuis une position initiale représentée en traits discontinus sur la figure 6 dans une position au plus près de la couche à former, représentée en traits pleins sur la figure 6. L'injecteur 6 ponctuel est ensuite déplacé selon l'axe Y transversal, le long du dispositif 5 d'étalement, de manière à distribuer, comme dans le deuxième exemple de réalisation, une ligne L de poudre dont la dimension transversale est adaptée en fonction de la dimension transversale de la tranche de la pièce P à fabriquer. La quantité de poudre le long de la ligne L de poudre est également ajustée, par exemple comme dans le deuxième exemple pour compenser l'effet de langue lors de l'étalement.

Lorsque l'injecteur 6 est solidaire en déplacement longitudinal du dispositif 5 d'étalement, le déplacement transversal de l'injecteur 6 de poudre et l'injection de poudre peuvent se faire en même temps que le dispositif 5 d'étalement se déplace longitudinalement par exemple pour s'adapter à une géométrie particulière comme dans le troisième exemple.

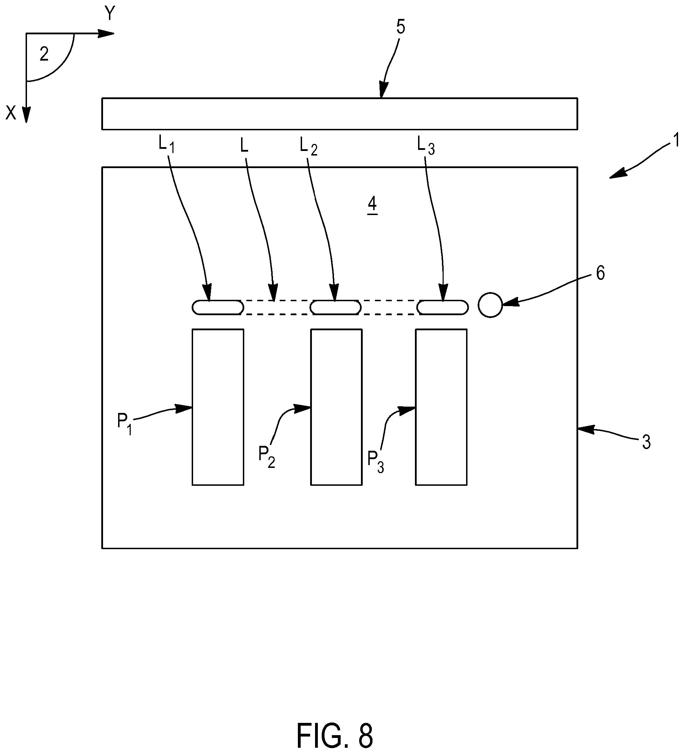

Sur la figure 8, un cinquième exemple de mise en oeuvre du procédé de fabrication est illustré, dans lequel la tranche de pièce P à fabriquer comprend trois portions P₁, P₂ et P₃ disjointes. Dans ce cas, le système de régulation régule la quantité de poudre distribuée par l'injecteur 6 pour former une ligne L discontinue sur la surface 2 de travail, c'est-à-dire que la ligne L de poudre comprend trois tronçons respectivement L₁, L₂, L₃ qui sont disjoints, et qui correspondent, en dimension transversale et en position, aux portions respectivement P₁, P₂ et P₃ de la tranche. En d'autres termes, il existe des points de la trajectoire de l'injecteur 6 pour lesquels la quantité de poudre distribuée est nulle.

Ces exemples ne sont pas limitatifs. On comprend que grâce au déplacement de l'injecteur au moins selon l'axe Y transversal et au contrôle de la quantité de poudre pendant ce déplacement, il est possible en tout point de la trajectoire de l'injecteur 6 d'avoir une quantité de poudre adaptée aux besoins. Ainsi, en un point de la trajectoire de l'injecteur 6, il peut ne pas y avoir du tout de poudre distribuée, ou une quantité fonction notamment de la géométrie et/ou de la forme de la tranche considérée de la pièce P à fabriquer et/ou de la position de la tranche considérée de la pièce P à fabriquer et/ou de l'effet de langue et/ou de l'effet d'affaissement. La trajectoire de l'injecteur 6 peut être rectiligne ou courbe.

La quantité de poudre distribuée en tout point peut être déterminée par exemple en masse ou en volume. Comme dans les exemples décrits ici, la quantité de poudre distribuée en tout point de la trajectoire de l'injecteur 6 est déterminée par la hauteur de poudre. L'injecteur 6 peut alors également être mobile par rapport au plan 2 de travail selon l'axe Z vertical, par exemple pour se déplacer suivant Z pour suivre la hauteur de poudre distribuée.

L'injecteur 6 peut également être mis en oeuvre pour distribuer plusieurs matériaux. Par exemple, l'injecteur 6 peut préparer une première ligne de poudre d'un premier matériau et une deuxième ligne de poudre d'un deuxième matériau, les deux lignes étant écartées l'une de l'autre longitudinalement et/ou transversalement.

Bien que dans les exemples présentés ci-dessous, la machine 1 comprend un seul injecteur 6 ponctuel, il peut en être autrement. Par exemple, la machine 1 peut comprendre deux injecteurs 6 ponctuels, mobiles par rapport à la surface 2 de travail, chacun assurant la distribution de poudre sur la surface 4 cible et permettant par exemple l'utilisation de poudres identiques ou différentes. Un deuxième dispositif 5 d'étalement peut alors avantageusement être utilisé avec le deuxième injecteur 6 ponctuel. L'utilisation d'un injecteur 6 dédié à chaque type de matériau présente l'avantage de faciliter le nettoyage et le suivi des lots de poudre. Ainsi, de manière générale, la machine 1 peut comprendre autant d'injecteurs 6 que de types de matériau qu'il est envisagé d'utiliser pour fabriquer la pièce P.

Avantageusement, la machine 1 peut comprendre en outre un mécanisme de nettoyage de la surface 2 de travail, de manière à s'assurer que l'injecteur 6 distribue une ligne de la poudre sur la surface 2 de travail sans qu'il ne reste de poudre de la couche précédente et donc de manière à s'assurer que la hauteur de poudre distribuée sur la surface 2 de travail par l'injecteur 6 est connue avec précision. Le mécanisme de nettoyage se présente par exemple sous la forme d'une raclette mobile par rapport à la surface 2 de travail permettant de pousser la poudre en dehors de la surface 2 de travail. La raclette peut être avantageusement fixée à l'injecteur 6, de sorte qu'une fois que l'injecteur 6 a distribué une ligne de poudre sur la surface 2 de travail dans un déplacement aller, le déplacement retour de l'injecteur 6, sans distribuer de poudre, permet d'évacuer la poudre en excès sur son passage. La raclette peut être unidirectionnelle, c'est-à-dire qu'elle pousse la poudre uniquement pour un même sens de déplacement. Pour accroitre la productivité de la machine, il peut être avantageux de ne pas ramener l'injecteur dans une même position initiale pour démarrer chaque ligne de poudre. Dans ce cas, une raclette escamotable est disposée de chaque côté de l'injecteur 6 selon sa direction de déplacement. La raclette disposée devant l'injecteur selon son sens de déplacement évacue la poudre restante sur la surface 2 de travail avant que l'injecteur 6 ne distribue la poudre alors que la raclette disposée de l'autre côté est relevée pour ne pas toucher la poudre que l'injecteur vient de distribuer. La raclette permet par ailleurs de gratter les scories, c'est-à-dire les morceaux de poudre agglomérées mais qui ne font pas partie de la pièce P à fabriquer. La poudre évacuée par la raclette peut alors être emmenée à un point déterminé de la surface 2 de travail où elle est évacuée par un orifice dédié.

En combinaison avec le mécanisme de nettoyage de la surface ou en remplacement, la machine 1 peut comprendre un système de vérification de la quantité de poudre restante sur la surface 2 de travail, avant de distribuer une nouvelle ligne L de poudre pour la couche suivante. Le système de vérification peut comprendre par exemple un capteur de hauteur de poudre restante en tout point de la surface 2 de travail. Le dispositif de régulation peut ainsi adapter la distribution de poudre par l'injecteur 6 sur la surface 2 de travail en fonction de la quantité restante pour atteindre la quantité déterminée, et ce en tout point de la trajectoire de l'injecteur 6. En variante, la machine peut comprendre un système de vérification de la quantité de poudre déposée sur la surface 11 de réception permettant de contrôler en boucle fermée le débit de poudre délivré par l'injecteur.

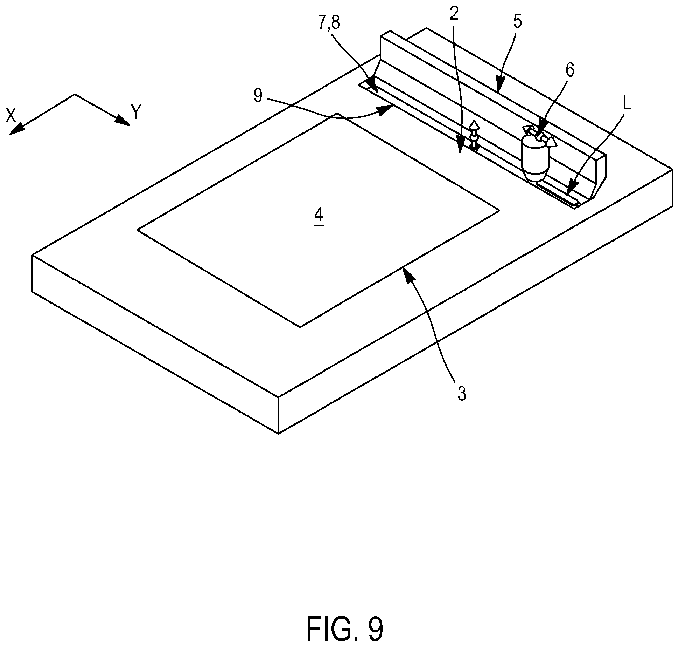

Selon une variante de réalisation dans laquelle l'injecteur 6 est fixe suivant la direction longitudinale (figure 9), la ligne L de poudre, pour chaque couche, est localisée par rapport à la surface 2 de travail sur une surface 7 déterminée, dite de réception. La surface 7 de réception est mobile par rapport à la surface 2 de travail selon une direction verticale, de manière à régler la quantité de poudre avec une précision accrue. Par exemple, la surface 7 de réception mobile est formée par une surface supérieure d'un tiroir 8 se déplaçant verticalement dans une rainure 9 transversale par rapport à la surface 2 de travail. La dimension du tiroir 8 est adaptée pour permettre le glissement vertical dans la rainure 9, avec un jeu juste suffisant, et la sortie de l'injecteur 6 est en contact avec la surface 2 de travail, de manière à déposer de la poudre uniquement dans la rainure 9, sur la surface 7 de réception. Plus précisément, partant d'une position dans laquelle le tiroir 8 est dans une position basse, à proximité du fond de la rainure 9, l'injecteur 6 se déplace transversalement par rapport à la surface 2 de travail pour distribuer de la poudre sur la surface 7 de réception. La dimension longitudinale de la rainure 9 étant connue, en ajustant la hauteur de l'injecteur 6 par rapport à la surface 7 de réception pendant le déplacement transversal de l'injecteur 6, le volume de poudre distribuée dans la rainure est connu avec précision. Une fois que l'injecteur 6 a terminé son déplacement, la surface 7 de réception est déplacée verticalement d'une hauteur contrôlée et connue pour être étalée par le dispositif 5 d'étalement. Ainsi, le long d'une direction transversale, la hauteur de poudre émergeant hors de la rainure 9 est contrôlée et connue. La poudre distribuée sur la surface 7 de réception peut être émergée complètement, sur toute sa hauteur, hors de la rainure 9, la surface 7 de réception affleurant la surface 2 de travail. Toutefois, une partie seulement de la poudre distribuée sur la surface 7 de réception peut être émergée hors de la rainure 7.

Selon un exemple de réalisation avantageux, la base de l'injecteur 6 a une forme permettant de recouvrir la largeur de la rainure 9 et la poudre tombe de l'injecteur 6 sensiblement par gravité. L'injecteur 6 est maintenu au voisinage immédiat de la surface 2 de travail lors de l'injection de poudre dans le tiroir 8 de sorte que de la poudre ne puisse pas se glisser entre la surface de travail et l'injecteur. Ainsi, lorsque la poudre remplit le volume du tiroir placé sous l'injecteur, elle obstrue toute l'ouverture de l'injecteur 6 par laquelle s'écoule la poudre, et il n'y a plus d'écoulement de poudre. En contrôlant la position verticale du tiroir 8 lors du déplacement de l'injecteur 6 selon la direction transversale, il est ainsi possible d'obtenir une grande précision sur la quantité de poudre distribuée.

La rainure 9 permet éventuellement de récupérer l'excès de poudre.

Par exemple, le dispositif 5 d'étalement ayant étalé une couche de poudre au moins en partie sur la surface 4 cible dans un mouvement aller et la tranche de pièce ayant été fondue et solidifiée, le dispositif 5 d'étalement peut être équipé pour collecter la poudre en excès dans un mouvement retour. Le tiroir 8 ayant été abaissé vers le fond de la rainure 9, la poudre peut tomber sur la surface 7 de réception ou sur le fond de la rainure 9. La machine 1 peut alors comprendre un système de récupération permettant d'évacuer la poudre hors de la rainure 9.

Il peut également être prévu de placer deux rainures de part et d'autre, dans la direction longitudinale, de la surface 4 cible, dans chacune desquelles un tiroir 8 est mobile verticalement. Ainsi, le dispositif 5 d'étalement peut, dans un même mouvement, étaler une couche de poudre sur la surface 4 cible et faire tomber la poudre en excès dans une rainure. Puis, dans le mouvement contraire, distribuer une nouvelle couche de poudre et faire tomber la couche en excès de cette nouvelle couche dans l'autre rainure.

En variante encore, la machine 1 peut comprendre une ou deux rainures permettant de récupérer la poudre en excès, qui ne sont pas associées à un tiroir.

Ainsi, en utilisant l'injecteur 6 ponctuel mobile par rapport à la surface 2 de travail, la quantité de poudre requise peut être ajustée au mieux, en tenant compte de différents paramètres tels que l'effet de langue, la géométrie de la pièce, ses dimensions, et sa position sur la surface 4 cible. La poudre en excès par rapport à la pièce P à fabriquer est donc diminuée.

En localisant au moins transversalement la poudre distribuée sur la surface 2 de travail, les opérations de nettoyage de la machine 1 sont limitées. En effet, notamment dans le cas où les dimensions de la pièce P à fabriquer sont inférieures aux dimensions du plateau support de pièce, c'est-à-dire de la surface 4 cible, la poudre peut être distribuée uniquement sur la surface 4 cible même en tenant compte de la compensation de l'effet de langue lors de l'étalement. Ainsi, toute la poudre est localisée sur le plateau support, dans la chemise 3, de sorte que le nettoyage de la poudre, notamment à l'occasion du changement de lots de poudre, est réduit à la chemise.

Selon un mode de réalisation, l'injecteur 6 peut être directement connecté à un réservoir de poudre. Le circuit d'alimentation en poudre comprend alors par exemple le réservoir, l'injecteur, et un flexible connectant le réservoir à l'injecteur 6. Eventuellement, une trémie permettant de doser la poudre peut être interposée dans le circuit entre le réservoir et l'injecteur 6. Il n'y a pas d'autre élément interposé entre la poudre et la surface 2 de travail, l'injecteur 6 injectant la poudre directement sur la surface 2 de travail. Par conséquent, lorsque le lot de poudre doit être changé, afin de s'assurer qu'il ne reste plus de poudre dans le circuit d'alimentation en poudre, celui-ci peut être retiré de la machine, nettoyé complètement, puis replacé dans la machine. Par exemple, l'injecteur 6 est monté dans la machine 1 de manière amovible sur un support, le support assurant le guidage en déplacement transversal, et éventuellement longitudinal et en hauteur, de l'injecteur 6. Un système de verrouillage et de déverrouillage de l'injecteur sur son support est alors prévu de manière à permettre le retrait de l'injecteur 6 hors de la machine 1 facilement.

Le temps de fabrication est également diminué, puisque la quantité de poudre à distribuer est réduite.

La quantité de poudre utilisée à chaque couche étant réduite au plus proche de la quantité de poudre fusionnée, la poudre polluée par les scories pendant la fusion est également diminuée. Le temps et donc les coûts de recyclage de la poudre polluée s'en trouvent réduits.

## Revendications

1. Procédé de fabrication additive d'une pièce (P) par fusion sélective partielle ou totale d'une poudre au sein d'une machine (1) comprenant :
- une surface (2) de travail destinée à recevoir une couche de poudre,
- un dispositif (5) d'étalement de ladite couche de poudre selon au moins une direction horizontale longitudinale sur la surface (2) de travail,
- au moins un injecteur (6) pour injecter directement de la poudre sur la surface (2) de travail, l'injecteur (6) étant mobile par rapport à la surface (2) de travail selon au moins une direction horizontale transversale,
- un système de régulation de la quantité de poudre distribuée par l'injecteur (6),
le procédé comprenant les étapes suivantes :
- déplacer l'injecteur (6) le long d'une trajectoire comprenant au moins une composante parallèle à la direction horizontale transversale de manière à distribuer de la poudre le long d'une ligne (L) sur la surface (2) de travail ;
- réguler la quantité de poudre distribuée par l'injecteur (6) en tout point de la trajectoire de l'injecteur (6), la hauteur de poudre de la ligne L de poudre distribuée étant variable en fonction de la position transversale sur la ligne L de poudre.

2. Procédé de fabrication additive selon la revendication 1, dans lequel l'injecteur (6) est mobile par rapport à la surface (2) de travail selon la direction longitudinale.

3. Procédé de fabrication additive selon la revendication 2, dans lequel l'injecteur (6) est solidaire selon la direction longitudinale au dispositif (5) d'étalement.

4. Procédé de fabrication additive selon l'une quelconque des revendications précédentes, dans lequel l'injecteur (6) est monté de manière amovible dans la machine (1).

5. Procédé de fabrication additive selon l'une quelconque des revendications précédentes, dans lequel l'injecteur (6) est mobile par rapport à la surface (2) de travail selon une direction verticale, le système de régulation réglant la position verticale de l'injecteur (6) par rapport à la surface (2) de travail.

6. Procédé de fabrication additive selon l'une quelconque des revendications précédentes, dans lequel l'étape consistant à réguler la quantité de poudre distribuée par l'injecteur (6) en tout point de la trajectoire de l'injecteur (6) est réalisée en fonction de la géométrie de la pièce (P) à fabriquer.

7. Procédé de fabrication additive selon l'une quelconque des revendications précédentes, dans lequel l'étape consistant à réguler la quantité de poudre distribuée par l'injecteur (6) en tout point de la trajectoire de l'injecteur (6) est réalisée en fonction des dimensions de la pièce (P) à fabriquer.

8. Procédé de fabrication additive selon l'une quelconque des revendications précédentes, dans lequel l'étape consistant à réguler la quantité de poudre distribuée par l'injecteur (6) en tout point de la trajectoire de l'injecteur (6) est réalisée en fonction de la position de la pièce (P) à fabriquer sur la surface (2) de travail.

9. Procédé de fabrication additive selon l'une quelconque des revendications précédentes, dans lequel l'étape consistant à réguler la quantité de poudre distribuée par l'injecteur (6) en tout point de la trajectoire de l'injecteur (6) est réalisée en fonction du matériau de la zone de la pièce (P) à fabriquer sur la surface (2) de travail.

## Patentansprüche

1. Verfahren zur additiven Fertigung eines Teils (P) durch partielles oder vollständiges selektives Schmelzen eines Pulvers in einer Maschine (1), umfassend:
- eine Arbeitsfläche (2), die dazu bestimmt ist, eine Pulverschicht aufzunehmen,
- eine Ausbreitvorrichtung (5) zum Ausbreiten der Pulverschicht in mindestens eine horizontale Längsrichtung auf der Arbeitsfläche (2),
- mindestens einen Injektor (6), um Pulver direkt auf die Arbeitsfläche (2) zu injizieren, wobei der Injektor (6) in Bezug auf die Arbeitsfläche (2) in mindestens eine horizontale Querrichtung beweglich ist,
- ein System zur Regulierung der vom Injektor (6) ausgegebenen Pulvermenge, wobei das Verfahren die folgenden Schritte umfasst:
- Bewegen des Injektors (6) entlang einer Bahn, die mindestens eine zur horizontalen Querrichtung parallele Komponente umfasst, so dass Pulver auf der Arbeitsfläche (2) entlang einer Linie (L) ausgegeben wird;
- Regulieren der vom Injektor (6) ausgegebenen Pulvermenge an jedem Punkt der Bahn des Injektors (6), wobei die Pulverhöhe der ausgegebenen Pulverlinie L in Abhängigkeit von der Querposition auf der Pulverlinie L variabel ist.

2. Verfahren zur additiven Fertigung nach Anspruch 1, bei dem der Injektor (6) in Bezug auf die Arbeitsfläche (2) in Längsrichtung beweglich ist.

3. Verfahren zur additiven Fertigung nach Anspruch 2, bei dem der Injektor (6) in Längsrichtung fest mit der Ausbreitvorrichtung (5) verbunden ist.

4. Verfahren zur additiven Fertigung nach einem der vorhergehenden Ansprüche, bei dem der Injektor (6) lösbar in der Maschine (1) montiert ist.

5. Verfahren zur additiven Fertigung nach einem der vorhergehenden Ansprüche, bei dem der Injektor (6) in Bezug auf die Arbeitsfläche (2) in eine vertikale Richtung beweglich ist, wobei das Regulierungssystem die vertikale Position des Injektors (6) in Bezug auf die Arbeitsfläche (2) regelt.

6. Verfahren zur additiven Fertigung nach einem der vorhergehenden Ansprüche, wobei der Schritt, der darin besteht, die vom Injektor (6) ausgegebene Pulvermenge an jedem Punkt der Bahn des Injektors (6) zu regulieren, in Abhängigkeit von der Geometrie des zu fertigenden Teils (P) ausgeführt wird.

7. Verfahren zur additiven Fertigung nach einem der vorhergehenden Ansprüche, wobei der Schritt, der darin besteht, die vom Injektor (6) ausgegebene Pulvermenge an jedem Punkt der Bahn des Injektors (6) zu regulieren, in Abhängigkeit von den Abmessungen des zu fertigenden Teils (P) ausgeführt wird.

8. Verfahren zur additiven Fertigung nach einem der vorhergehenden Ansprüche, wobei der Schritt, der darin besteht, die vom Injektor (6) ausgegebene Pulvermenge an jedem Punkt der Bahn des Injektors (6) zu regulieren, in Abhängigkeit von der Position des zu fertigenden Teils (P) ausgeführt auf der Arbeitsfläche (2) ausgeführt wird.

9. Verfahren zur additiven Fertigung nach einem der vorhergehenden Ansprüche, wobei der Schritt, der darin besteht, die vom Injektor (6) ausgegebene Pulvermenge an jedem Punkt der Bahn des Injektors (6) zu regulieren, in Abhängigkeit vom Werkstoff des Bereichs des zu fertigenden Teils (P) auf der Arbeitsfläche (2) ausgeführt wird.

## Claims

1. Process for the additive manufacture of a part (P) by partial or complete selective melting of a powder within a machine (1), said machine comprising:
- a working surface (2) intended to receive a powder layer,
- a device (5) for spreading the said powder layer along at least one longitudinal horizontal direction over the working surface (2),
- at least one injector (6) for directly injecting powder over the working surface (2), the injector (6) being movable with respect to the working surface (2) along at least one transverse horizontal direction,
- a system for regulating the amount of powder dispensed by the injector (6),
the process comprising the following stages:
- moving the injector (6) along a trajectory comprising at least one component parallel to the transverse horizontal direction in order to dispense powder along at least one transverse line L over the working surface (2);
- regulating the amount of powder dispensed by the injector (6) at any point of the trajectory of the injector (6), the height of powder of the line (L) of dispensed powder varying according to the transverse position on the line (L) of powder.

2. Additive manufacturing process according to Claim 1, in which the injector (6) is movable with respect to the working surface (2) along the longitudinal direction.

3. Additive manufacturing process according to Claim 2, in which the injector (6) is integrally attached along the longitudinal direction to the spreading device (5).

4. Additive manufacturing process according to any one of the preceding claims, in which the injector (6) is mounted in movable fashion in the machine (1).

5. Additive manufacturing process according to any one of the preceding claims, in which the injector (6) is movable with respect to the working surface (2) along a vertical direction, the regulating system regulating the vertical position of the injector (6) with respect to the working surface (2).

6. Additive manufacturing process according to any one of the preceding claims, in which the stage consisting in regulating the amount of powder dispensed by the injector (6) at any point of the trajectory of the injector (6) is carried out as a function of the geometry of the part (P) to be manufactured.

7. Additive manufacturing process according to any one of the preceding claims, in which the stage consisting in regulating the amount of powder dispensed by the injector (6) at any point of the trajectory of the injector (6) is carried out as a function of the dimensions of the part (P) to be manufactured.

8. Additive manufacturing process according to any one of the preceding claims, in which the stage consisting in regulating the amount of powder dispensed by the injector (6) at any point of the trajectory of the injector (6) is carried out as a function of the position of the part (P) to be manufactured on the working surface (2).

9. Additive manufacturing process according to any one of the preceding claims, in which the stage consisting in regulating the amount of powder dispensed by the injector (6) at any point of the trajectory of the injector (6) is carried out as a function of the material of the region of the part (P) to be manufactured on the working surface (2).
